Europäisches Patentamt

European Patent Office

Office européen des brevets

(11) Veröffentlichungsnummer: **0 277 484 B1**

(12) **EUROPÄISCHE PATENTSCHRIFT**

(45) Veröffentlichungstag der Patentschrift: **15.04.92**

(51) Int. Cl.⁵: **F16J 15/32**

(21) Anmeldenummer: **88100210.9**

(22) Anmeldetag: **09.01.88**

(54) **Dichtungs- und Abstreifer-Anordnung.**

(30) Priorität: **02.02.87 DE 3702977**

(43) Veröffentlichungstag der Anmeldung:
**10.08.88 Patentblatt 88/32**

(45) Bekanntmachung des Hinweises auf die
Patenterteilung:
**15.04.92 Patentblatt 92/16**

(84) Benannte Vertragsstaaten:
**CH ES FR GB IT LI**

(56) Entgegenhaltungen:
**EP-A- 0 207 703**    **DD-B- 145 187**
**DE-A- 1 902 491**    **DE-A- 1 945 366**
**DE-A- 2 113 557**    **DE-A- 3 026 063**
**US-A- 2 437 901**    **US-A- 3 418 001**

(73) Patentinhaber: **Busak + Luyken GmbH & Co.
Handwerkstrasse 5-7
W-7000 Stuttgart 80(DE)**

(72) Erfinder: **Edlund, Roy
Mittlerer Bauernwaldweg 22
W-7000 Stuttgart 1(DE)**

(74) Vertreter: **KOHLER SCHMID + PARTNER Patentanwälte
Ruppmannstrasse 27
W-7000 Stuttgart 80(DE)**

## Beschreibung

Die Erfindung betrifft eine Dichtungs- und Abstreifer-Anordnung mit einem in die Nut eines von zwei senkrecht zur Nut gegeneinander beweglichen Maschinenteilen eingelegten Dichtring aus zähelastischem Kunststoff und einer sich zwischen Dichtring und Nutgrund befindenden, den Dichtring radial belastenden Spannringanordnung aus gummielastischem Material, wobei der Dichtring nahe seinen Enden am anderen Maschinenteil anliegende Kanten aufweist, die im Betrieb beide gleichzeitig als Dichtkanten wirksam sind und mindestens einen zum Dichtring konzentrischen Ringraum begrenzen, der sowohl gegenüber dem zur einen Seite der Anordnung gelegenen Hochdruckbereich als auch gegenüber dem zur anderen Seite der Anordnung gelegenen Niederdruck abgedichtet ist, und von denen wenigstens eine Kante von der Schnittlinie zwischen zwei in entgegengesetzten Richtungen ansteigenden Kegelflächen gebildet wird.

Eine solche Anordnung ist als Doppelabstreifer-Anordnung unter der durch das Warenzeichen geschützten Bezeichnung "Turcon-Excluder 2" bekannt. Bei dieser bekannten Doppelabstreifer-Anordnung weist der Dichtring an seinem niederdruckseitigen Ende einen im Querschnitt im wesentlichen rechteckigen Abstreifsteg auf, der mit einem flachen Flächenabschnitt am Umfang des anderen Maschinenteiles anliegt. Die Kante wird daher von der Schnittlinie zwischen diesem flachen Flächenabschnitt und der inneren Flanke des Abstreifsteges gebildet. Als Spannringanordnung findet ein O-Ring Verwendung, der im wesentlichen symmetrisch zu der durch die innere Flanke des Abstreifsteges definierten Ebene angeordnet ist. Dieser O-Ring liegt in einer zur Stirnfläche des Dichtringes hin offenen Ringnut.

Solche Doppelabstreifer-Anordnungen finden insbesondere bei hydraulischen Kolben-Zylinder-Einheiten Anwendung, bei denen der Dichtring und der Spannring in die Stangenführung eingebaut werden. Dabei sind der Doppelabstreifer-Anordnung hochdruckseitig ein oder mehr Dichtungsanordnungen vorgeschaltet, so daß der Dichtring der Doppelabstreifer-Anordnung im wesentlichen nur die Aufgabe hat, an dem äußeren Teil der Stange anhaftende Verunreinigungen abzustreifen und deren Eindringen in den eigentlichen Dichtungsbereich zu verhindern. Die außenliegende Abstreiflippe, die bei der Doppelabstreifer-Anordnung der eingangs genannten Art von dem im Querschnitt im wesentlichen rechteckigen Abstreifsteg gebildet wird, ist ausreichend steif, um auch grobe Schmutzteile mit Sicherheit von der Stangenoberfläche zu lösen. Auch sie muß aber gleichzeitig ausreichend dicht sein, um anhaftende Öle und Fette mit Sicherheit abzustreifen. Zugleich soll der Dichtring auch noch verhindern, daß durch die vorgeschaltete Dichtungsanordnung hindurchtretende Leckflüssigkeit nach außen dringt.

Die bisher bekannten Doppelabstreifer-Anordnungen erfüllen diesen Zweck nicht in ausreichendem Maße. Daher wurde bereits der Versuch gemacht, die Wirkung der Doppelabstreifer-Anordnung dadurch zu verbessern, daß man sie in ihre Nut mit axialer Vorspannung einbaut und außerdem dem den Spannring aufnehmenden Raum zum Ende des Dichtringes hin verengt, um dadurch längs des am anderen Maschinenteil flach anliegenden Flächenabschnittes eine vorgegebene Kraftverteilung zu erzielen. Obwohl hierdurch bereits eine erhebliche Verbesserung des kombinierten Abstreif- und Dichtverhaltens erzielt werden konnte, erscheint diese Anordnung noch nicht für alle Zwecke optimal.

Aus der EP-A 207 703 ist eine Dichtungsanordnung bekannt, die einen Dichtring mit zwei Dichtkanten und einem Zwischensteg aufweist, der über einen im Querschnitt ovalen Spannring vorgespannt ist. Mit dieser Anordnung läßt sich die Vorspannkraft nicht gezielt in die beiden Dichtkanten einleiten.

Weiterhin ist aus der US-A 2,437, 901 eine Dichtungsanordnung bekannt, die zwei endlose Schraubenfedern aufweist. Über die Schraubenfedern sind die flächenhaft aufliegenden Endabschnitte des Dichtrings vorgespannt. Die Schraubenfedern wirken nicht wie Spannringe als zusätzliche Dichtelemente.

Demgemäß liegt der Erfindung die Aufgabe zugrunde, eine Dichtungs- und Abstreifer-Anordnung der eingangs genannten Art so zu verbessern, daß sie eine einwandfreie Sperre sowohl gegen austretende Leckflüssigkeit als auch gegen eindringende Fremdkörper unterschiedlichster Art bildet.

Diese Aufgabe wird nach der Erfindung sowohl durch die kennzeichnenden Merkmale des Anspruchs 1 wie auch durch die kennzeichnenden Merkmalde des Anspruchs 2 gelöst.

Bei der erfindungsgemäßen Anordnung besteht die Möglichkeit, durch eine entsprechende Dimensionierung der Spannringanordnung die beiden nahe den beiden Enden des Dichtringes vorhandenen Kanten weitgehend unabhängig voneinander in solcher Weise zu belasten, daß sie ihren Zweck optimal erfüllen. Dabei eröffnet die Möglichkeit, die beiden Kanten individuell zu belasten, auch noch die weitere Möglichkeit, die beiden Kanten oder, genauer gesagt, die die beiden Kanten bildenden Stege ebenfalls unterschiedlich auszubilden und eine dem jeweiligen Anwendungszweck optimal angepaßte Querschnittsform zu geben. Daher lassen sich nach der Erfindung Dichtungs- und Abstreifer-Anordnungen herstellen, die eine sehr große Sicherheit gegen eindringenden Schmutz bieten, also eine sehr gute Abstreiferwirkung auch unter schwersten Bedingungen haben, und deren innere Kante zugleich eine sehr gute Sperre gegen irgendwelches Lecköl bildet, das vorgeschaltete Dichtungen durchdringen könnte, und die sogar allein als Dichtung dienen könnte. Dabei lassen sich solche Anordnungen wahlweise als innen- oder außendichtende Dichtungs- und Abstreifer-Anordnungen ausbilden.

Wie sich bereits aus den vorstehenden Ausführungen ergibt, läßt die Erfindung eine Vielzahl unterschiedlichster Ausführungsformen von Dichtungs- und Abstreifer-Anordnungen zu. So können sich beispielsweise unterschiedliche Ausführungsformen dadurch ergeben, daß die Spannringanordnung von einem einzigen Spannring oder aber von zwei getrennten Spannringen gebildet wird. Findet ein einziger Spannring Verwendung, so kann er insbesondere als Vierlippendichtring ausgebildet sein, obwohl auch andere Ringquerschnitte denkbar sind. Beispielsweise könnte ein einteiliger Spannring etwa den Querschnitt von zwei nebeneinander angeordneten Hälften eines O-Ringes haben.

Während die Verwendung eines einzigen Spannringes zu einfacher ausgebildeten Ausführungsformen führt, bietet die Anwendung zweier getrennter Spannringe weitergehende Möglichkeiten für die Gestaltung der Dichtungs- und Abstreifer-Anordnung, insbesondere für die individuelle Bemessung der die beiden Kanten belastenden Kräfte. Weiterhin bietet die Verwendung zweier getrennter Spannringe die Möglichkeit, den Dichtring an seiner den Spannringen zugewandten Seite mit einem zwischen die beiden Spannringe ragenden Trennsteg zu versehen. Ein solcher Trennsteg bietet die Möglichkeit, die Lage der beiden Spannringe genauer zu definieren, und hat darüber hinaus den besonderen Vorteil, daß der Dichtring sehr dünnwandig ausgebildet werden kann, weil er durch den Trennsteg eine ausreichende Steifigkeit erhält. Auf diese Weise wird nicht nur eine Materialersparnis erzielt, sondern es kann auch die die Dichtungs- und Abstreifer-Anordnung aufnehmende Nut weniger tief ausgebildet sein, was für die Ausbildung der gegeneinander abzudichtenden Maschinenteile günstig ist. Gleichzeitig wird die Steifigkeit der die Kanten tragenden Abschnitte des Dichtringes vermindert, so daß die Kräfte, mit denen die Kanten des Dichtringes an dem Maschinenteil anliegen, im wesentlichen durch die Spannringe bestimmt sind. Dabei ist es für die Einleitung der Kräfte und eine definierte Lage der Spannringe günstig, wenn die Anlagefläche für wenigstens einen Spannring am Dichtring vom Trennsteg aus in Richtung auf den Spannring ansteigt.

Zur Versteifung des Dichtringes kann es auch zweckmäßig sein, anstelle des Trennsteges oder zusätzlich dazu einen Stützsteg vorzusehen, der sich im Bereich zwischen den beiden Kanten des Dichtringes befindet und am anderen Maschinenteil anliegt. Ein solcher Stützsteg ist nicht sehr hoch belastet, weil die von der Spannringanordnung ausgeübten Kräfte im wesentlichen auf die zu beiden Seiten des Stützsteges angeordneten Kanten gerichtet sind, jedoch verhindert er das Aufkommen von unstabilen Lagen und insbesondere eine Art Einknicken des Dichtringes im Bereich seiner Mitte. Dabei kann der Stützsteg einen beliebigen Querschnitt haben und insbesondere einen im wesentlichen rechteckigen Querschnitt mit einem am anderen Maschinenteil flach anliegenden Flächenabschnitt aufweisen. Die Anwendung eines solchen Querschnittes hat den Vorteil, daß seine tragende Fläche relativ groß ist und daher keine sehr hohen Flächenpressungen auftreten, die an dieser Stelle nicht erwünscht sind. Insbesondere bei Anwendung eines mittleren Stützsteges kann die Dichtungs- und Abstreifer-Anordnung in bezug auf ihre Längsmittelebene symmetrisch ausgebildet sein. Dies würde bedeuten, daß an beiden Enden des Dichtringes Kanten vorhanden sind, die von der Schnittlinie zwischen zwei in entgegengesetzten Richtungen ansteigenden Kegelflächen gebildet werden.

Wie eingangs dargelegt, geht die Erfindung von einer bekannten Doppelabstreifer-Anordnung aus, bei der am niederdruckseitigen Ende des Dichtringes ein im Querschnitt im wesentlichen rechteckiger Abstreifsteg angeordnet ist, der mit einem flachen Flächenabschnitt am anderen Maschinenteil anliegt. Auch bei einem derart ausgebildeten Dichtring ist die erfindungsgemäße Anwendung einer Spannringanordnung mit zwei Abschnitten möglich, von denen jeder im wesentlichen eine der beiden auch an einem solchen Dichtring vorhandenen Kanten belastet. Bei einer solchen Ausbildung des Dichtringes kann die Wirkung des Spannringes oder Spannringabschnittes, der die an der inneren Flanke des rechteckigen Abstreifsteges liegende Kante belastet, dadurch unterstützt oder vermindert werden, daß der flache Flächenabschnitt bei entspanntem Dichtring nicht zylindrisch verläuft, sondern mit einer dem anderen Maschinenteil entsprechenden Zylinderfläche einen bis zu 15° betragenden Winkel bildet. Je nach der Richtung des Winkels wird dadurch die Wirkung des Spannringes erhöht oder vermindert, und es läßt sich, wie auch bei der Doppelabstreifer-Anordnung nach der DE-A-36 03 669, ein definierter Druckgradient längs dieser Fläche herstellen. Darüber hinaus ist aber bei der erfindungsgemäßen Anordnung auch ein definierter Anpreßdruck an der druckseitig liegenden Kante herstellbar.

Bei der erfindungsgemäßen Dichtungs- und Abstreifer-Anordnung wird das Druckmedium, welches die hochdruckseitige Kante am Dichtring passiert, von der äußeren Kante dieser Anordnung abgestreift, so daß sich in dem Raum zwischen den beiden Kanten eine gewisse Menge des Druckmediums ansammelt. Diese Menge ist umso größer, je größer die Dicke des die hochdruckseitige Kante passierenden Schmierfilms und je länger die Hubbewegung der beiden Maschinenteile gegeneinander ist. Der Raum zwischen den beiden Kanten muß die auf diese Weise sich bei einem Hub ansammelnde Flüssigkeitsmenge aufnehmen können, wenn ein einwandfreier Betrieb gewährleistet sein soll, auch wenn diese Flüssigkeitsmenge bei jedem Rückhub wieder auf die Hochdruckseite zurückgeschleppt wird. Die erfindungsgemäße Ausbildung der Dichtungs- und Abstreifer-Anordnung, für die es auf die Eigensteifigkeit des Dichtringes nicht ankommt, erlaubt es daher, Wandungsteile des Dichtringes sehr dünn auszubilden, so daß wenigstens eine Nut vorgesehen werden kann, in welche die wenigstens an die hochdruckseitige Kante anschließende, innenliegende Kegelfläche des Dichtringes übergeht und die einen erweiterten Ölraum bildet.

Ein besonderes Problem bildet bei Abstreifer-Anordnungen die sich an der Außenseite der Abstreiflippe ansammelnde Schmutzmenge. Der abgestreifte Schmutz kann an der Außenseite der Abstreiflippe radial bis in die die Dichtungs- und Abstreifer-Anordnung aufnehmende Nut getrieben werden und dort zwischen den Spannring und den Nutengrund gelangen, wodurch Undichtigkeiten und Beschädigungen am Spannring entstehen können. Die Erfindung ermöglicht auch hier eine Abhilfe, die darin besteht, daß der Dichtring am niederdruckseitigen Ende einen wenigstens annähernd bis zum Nutgrund reichenden, eine Schmutzabdichtung bildenden Ansatz aufweist. Ein solcher Ansatz verhindert, daß Schmutz bis zu dem gummielastischen Spannring vordringt und schützt daher die Anordnung vor Beschädigungen. Der die Schmutzabdichtung bildende Ansatz ist dann besonders wirksam, wenn er an seiner Außenseite nahe seinem Ende eine Ringnut aufweist, durch die am Ende des Ansatzes eine elastische Lippe gebildet wird, die sich dichtend an den Nutgrund anlegen kann, in der sich aber auch größere Schmutzmengen ansammeln können und die auch ein Umlenken des Schmutzes vom Nutgrund hinweg bewirkt.

Die Erfindung wird im folgenden anhand der in der Zeichnung dargestellten Ausführungsbeispiele näher beschrieben und erläutert. Es zeigen

Fig. 1 einen Querschnitt durch eine Dichtungs- und Abstreifer-Anordnung nach der Erfindung in stark vergrößertem Maßstab und

Fig. 2 einen Querschnitt durch die Dicht- und Spannringe einer weiteren Dichtungs- und Abstreifer- Anordnung nach der Erfindung in entspanntem Zustand und in weniger stark vergrößertem Maßstab als Fig. 1.

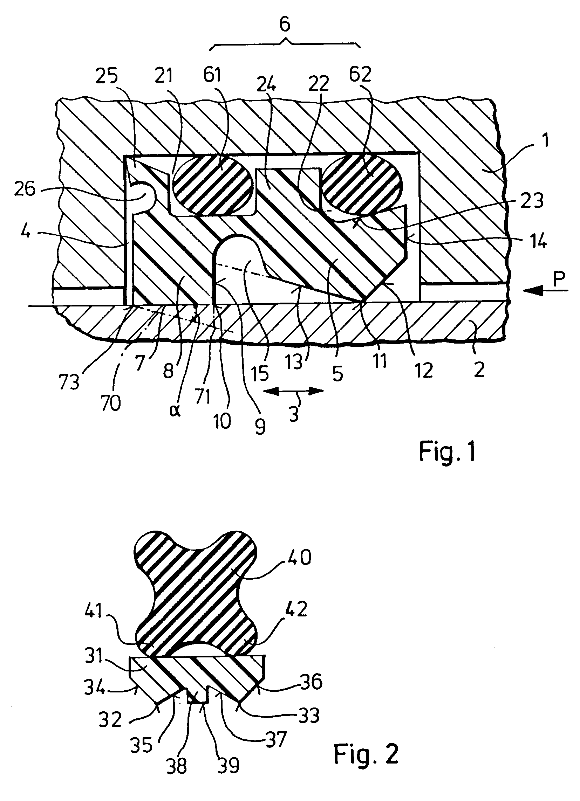

Die in Fig. 1 dargestellte Dicht- und Abstreifer-Anordnung dient an ihrer Niederdruckseite dem Abstreifen von Schmutz von einem Maschinenteil 2 und an ihrer Hochdruckseite dem Abstreifen von Leckageflüssigkeit im Spalt zwischen zwei Maschinenteilen 1 und 2, die sich im Betrieb in Richtung des Pfeiles 3 axial gegeneinander bewegen. Typischerweise handelt es sich bei dem Maschinenteil 2 um die Stange und bei dem Maschinenteil 1 um den Zylinder einer hydraulischen Kolben-Zylinder-Einheit. In diesem Fall liegt eine innendichtende Anordnung vor, es kann jedoch in entsprechender Weise auch eine außendichtende Anordnung geschaffen werden.

In das Maschinenteil 1 ist eine zur Bewegungsrichtung 3 senkrechte, kreisringförmige Nut 4 eingestochen, in der sich ein Dichtring 5 und eine von zwei Spannringen 61, 62 gebildete Spannringanordnung 6 befinden. Der Dichtring 5 besteht aus einem zähelastischen Kunststoff, beispielsweise einem Polyurethan oder einem gefüllten Polytetrafluorethylen. Er weist an seiner dem anderen Maschinenteil 2 zugewandten Lauffläche einen ersten Flächenabschnitt 7 auf, der an dem anderen Maschinenteil 2 flach anliegt und von dem Ende eines im Querschnitt rechteckigen Abstreifsteges 8 gebildet wird, dessen innere Flanke 9 mit dem am Maschinenteil 2 anliegenden Flächenabschnitt 7 eine Kante 10 bildet.

Am anderen Ende des Dichtringes 5 befindet sich eine weitere Kante 11 , die durch die Schnittlinie zwischen zwei Kegelflächen 12, 13 gebildet wird, von denen sich die eine Kegelfläche 12 bis zur hochdruckseitigen Stirnfläche 14 des Dichtringes 5 erstreckt und die andere Kegelfläche 13 in eine innere Nut 15 übergeht, die sich im Bereich zwischen dem Ende der inneren Kegelfläche 13 und der Flanke 9 des Abstreifsteges 8 befindet.

An der dem Grund der Nut 4 zugewandten Seite ist der Dichtring 5 mit einer ersten Nut 21 versehen, die etwa symmetrisch zu der durch die innere Flanke 9 des Abstreifsteges 8 definierten Ebene angeordnet ist und den einen Spannring 61 aufnimmt. Weiterhin befindet sich eine Aussparung 22 an dem hochdruckseitigen Ende des Dichtringes 5, die den anderen Spannring 62 aufnimmt und so angeordnet ist, daß sich dieser Spannring 62 etwa symmetrisch zu der Ebene befindet, welche durch die Kante 11 des Dichtringes 5 definiert ist. Diese Aussparung 22 erstreckt sich bis in die hochdruckseitige Stirnfläche 14 des Dichtringes und hat eine Anlagefläche 23 für den Spannring 62, die zum Ende des Dichtringes hin in Richtung auf den Spannring 62 ansteigt, so daß der Spannring 62 in Richtung auf den von der Nut 21 und der Aussparung 22 begrenzten Trennsteg 24 gedrückt wird. Weiterhin weist der Dichtring 5 an der Niederdruckseite einen bis in die Ecke der Ringnut 4 im ersten Maschinenteil 1 reichenden Ansatz 25 auf, der einerseits die Nut 21 für den einen Spannring 61 nach außen begrenzt und gleichzeitig dazu dient, den Abschnitt der Nut 4, in dem sich die gummielastischen Spannringe 61, 62 befinden, vor dem Eindringen von Schmutz zu bewahren, der von dem Abstreifsteg 8 von der Oberfläche des anderen Maschinenteiles 2 bei dessen Hubbewegung abgestreift wird und der die Tendenz haben könnte, an der Stirnfläche des Abstreifringes entlang in die Nut 4 einzudringen. Der die Schmutzabdichtung bildende Ansatz 25 ist an seiner Außenseite und nahe seinem Ende mit einer Ringnut 26 versehen, so daß sein äußerer Abschnitt eine elastische Lippe bildet, die sich dicht an die Flanke oder den Grund der die Anordnung aufnehmenden Ringnut 4 anlegt. Außerdem bildet die im Ansatz 25 angebrachte Ringnut 26 einen zusätzlichen Aufnahmeraum für Schmutzteilchen.

Es ist ohne weiteres ersichtlich, daß die in Fig. 1 dargestellte Anordnung die Möglichkeit bietet, durch geeignete Wahl der Dimensionen und des Materials für die Spannringe 61, 62 die Kanten 10 und 11 des Abstreifringes 5 in definierter Weise zu belasten und damit für den jeweiligen Einsatz optimale Anpreßkräfte zu erzeugen. Dabei gewährleistet der rechteckige Querschnitt des Abstreifsteges 8, daß von dem Dichtring genügend große Axialkräfte ausgeübt werden können, um auch starke Verschmutzungen von dem anderen Maschinenteil 2 zu entfernen. Gleichzeitig erlaubt es der Spannring 61, auf die innere Kante dieses Abstreifsteges eine definierte Kraft auszuüben, die gewährleistet, daß der noch die andere Kante 11 passierende Rest an Druckmedium einwandfrei zurückgehalten wird. Der von der Kegelfläche 13 begrenzte und durch die innere Nut 15 erweiterte Raum ist ausreichend, um auch bei langem Hub die die Kante 11 passierende Menge an Leckflüssigkeit aufzunehmen, zumal auch die von der Dichtkante 11 ausgeübte Dichtkraft mit Hilfe des Spannringes 62 sehr genau auf einen für den Anwendungszweck optimalen Wert eingestellt werden kann. Dabei ist zu beachten, daß durch die innere Nut 15, die zur Aufnahme von Leckflüssigkeit dient, eine Art Scharnier zwischen dem im Querschnitt rechteckigen Abstreifsteg 8 und dem mit der Dichtkante 11 versehenen Abschnitt des Dichtringes 5 geschaffen wird, das gewährleistet, daß die an der Kante 11 ausgeübte Dichtkraft fast ausschließlich durch die Kraft des Spannringes 62 bestimmt wird. Diese spezielle Ausbildung ermöglicht es außerdem, den Dichtring sehr flach, seine radiale Ausdehnung also sehr gering zu halten, wie auch die Verteilung der Spannringanordnung auf zwei Spannringe die Anwendung von Spannringen 61, 62 relativ kleinen Durchmesser zuläßt, mit dem Ergebnis, daß die Dichtungs- und Abstreifer-Anordnung einen nur sehr geringen Platzbedarf hat und demgemäß die in das Maschinenteil 1 einzustechende Nut 4 ebenfalls nur einen kleinen Querschnitt zu haben braucht. Die durch die Erfindung mögliche optimale Dimensionierung der Dicht-und AbstreiferAnordnung in Verbindung mit dem durch den Ansatz 25 erzielten Schutz gegen eindringenden Schmutz gewährleisten, daß eine solche Dichtungs- und Abstreifer-Anordnung eine maximale Wirkung bei maximaler Lebensdauer aufweist.

Fig. 2 zeigt eine Ausführungsform der Erfindung, bei der der Dichtring 31 nahe seinen beiden Enden Kanten 32, 33 aufweist, die jeweils von der Schnittlinie zwischen zwei in entgegengesetzten Richtungen ansteigenden Kegelflächen 34, 35 bzw. 36, 37 gebildet werden. Zwischen den beiden inneren Kegelflächen 35, 37 ist ein Stützsteg 38 angeordnet, der einen im wesentlichen rechteckigen Querschnitt hat und mit einem flachen Flächenabschnitt 39 an dem anderen Maschinenteil zur Anlage kommt. Wie ersichtlich, handelt es sich hierbei um eine in bezug auf die Längsmittelebene des Abstreifringes 31 symmetrische Anordnung. Zur Belastung dieses Abstreifringes 31 dient ein Vierlippendichtring 40, dessen am Abstreifring 31 anliegenden, wulstartigen Abschnitte 41, 42 sich im wesentlichen in der gleichen Radialebene befinden wie die Kanten 32 und 33, so daß wiederum im Bereich dieser Kanten definierte Spannkräfte ausgeübt werden.

Die in der Zeichnung dargestellten Ausführungsbeispiele lassen erkennen, daß die Erfindung viele Möglichkeiten für die Gestaltung einer Dichtungs- und Abstreifer-Anordnung bietet, die alle das gemeinsame Merkmal haben, an ihren für die Dicht-und Abstreiferwirkung wichtigen Kanten mit definierten Drücken belastet zu sein, so daß nach außen eine optimale Abstreiferwirkung und nach innen eine optimale Abdichtwirkung erzielt wird. So könnte zum Beispiel der Stützsteg 38 der Ausführungsform nach Fig. 2 statt mit rechteckigem Querschnitt mit einem dreieckförmigen Querschnitt ausgebildet werden. Es könnte dieser Stützsteg aber auch ganz entfallen und der Raum zwischen den Kanten 32, 33 sogar noch durch eine innere Nut erweitert werden, wenn hier eine besonders große Menge an Leitöl aufgenommen werden muß. Bei Verwendung von zwei Spannringen, die an den Flanken von sie aufnehmenden Aussparungen anliegen, kann durch die Bemessung der Flankenschrägen die von dem Spannring in den Dichtring eingeleitete Kraft genau auf die spezifisch zu belastende Kante gerichtet werden. Dabei sind nicht nur die im wesentlichen achsparallelen Flanken, die der Anlagefläche 23 in Fig. 1 entsprechen, sondern auch die im wesentlichen radial verlaufenden Flanken, die beispielsweise von den mehr oder weniger geneigten Seitenflächen eines Mittelsteges gebildet werden können, von Bedeutung. Weiterhin könnte bei der Ausführungsform nach Fig. 1 der an dem anderen Maschinenteil 2 anliegende Flächenabschnitt 7 des Abstreifsteges 8 in entspanntem Zustand des Dichtringes gegenüber einer der Oberfläche des Maschinenteiles 2 entsprechenden Zylinderfläche um einen Winkel α geneigt sein, wie es in Fig. 1 durch die strichpunktierte Linie 70 angedeutet ist. Dieser Winkel hat vorzugsweise einen Wert von höchstens 15° und kann in der aus Fig. 1 ersichtlichen Weise, aber auch umgekehrt gerichtet sein. Bei der in Fig. 1 dargestellten Ausführungsform überschneidet der Abstreifsteg 7 die dem Maschinenteil 2 entsprechende Zylinderfläche an seiner inneren Kante 71, wodurch die von dem Spannring 61 erzeugte Pressung noch verstärkt wird. Demgemäß wird ein stärkerer Druckgradient von der inneren Kante 71 zur äußeren Kante 73 des flachen Flächenabschnittes 7 erzielt, wenn sich diese Anordnung im eingebauten Zustand befindet. Wird dagegen ein nur sehr schwacher Gradient der Druckkräfte längs des Flächenabschnittes 7 gewünscht, könnte die Schräge umgekehrt gerichtet sein, so daß eine durch die Verformung des Dichtringes 5 verstärkte Pressung im Bereich der äußeren Kante 73 vorliegt und daher eine gewisse Kompensation der Abnahme der Anpreßkraft eintritt, welche durch die Gestaltung und Anordnung des Spannringes bedingt ist. Die nach der Erfindung, erreichbare Optimierung von Dichtungs- und Abstreifer-Anordnungen macht es möglich bei Verwendung solcher Anordnungen die Dichtungsanordnungen, die herkömmlichen Abstreiferanordnungen gewöhnlich vorgeschaltet sind, erheblich zu vereinfachen. Eine solche Vereinfachung, insbesondere das Einsparen eines oder mehrerer axial hintereinander angeordneter Dichtungsringe ergibt nicht nur eine Einsparung an diesen Dichtungsringen selbst, sondern ermöglicht auch eine erhebliche Verkürzung der Baulänge im Führungs- und Abdichtungsbereich von hydraulischen Kolben-Zylinder-Einheiten und führt daher zu sehr bedeutenden Einsparungen. Die aufgezeigten vielfältigen Gestaltungsmöglichkeiten erlauben eine optimale Anpassung an die unterschiedlichsten Betriebsbedingungen, so daß hier dem Fachmann ein neues Mittel zur Gestaltung von Dichtungs- und Abstreifer-Anordnungen an die Hand gegeben ist, das die Möglichkeit bietet, hydraulische Kolben-Zylinder-Einheiten bedeutend zu vereinfachen und zu verbilligen.

**Patentansprüche**

1. Dichtungs- und Abstreifer-Anordnung mit einem in die Nut (4) eines von zwei senkrecht zur Nut (4) gegeneinander beweglichen Maschinenteilen (1, 2) eingelegten Dichtring (5; 31) aus zähelastischem Kunststoff und einer sich zwischen Dichtring (5; 31) und Nutgrund befindenden, den Dichtring (5; 31) radial belastenden Spannringanordnung (40) aus gummielastischem Material, wobei der Dichtring (5; 31) nahe seinen Enden am anderen Maschinenteil (2) anliegende Kanten (10, 11; 32, 33) aufweist, die im Betrieb beide gleichzeitig als Dichtkanten wirksam sind und mindestens einen zum Dichtring (5; 31) konzentrischen Ringraum (15) begrenzen, der sowohl gegenüber dem zur einen Seite der Anordnung gelegenen Hochdruckbereich als auch gegenüber dem zur anderen Seite der Anordnung gelegenen Niederdruckbereich abgedichtet ist, und von denen wenigstens eine Kante (11; 32, 33) von der Schnittlinie zwischen zwei in entgegengesetzten Richtungen ansteigenden Kegelflächen (12, 13; 34, 35, 36, 37) gebildet wird, dadurch gekennzeichnet, daß die Spannringanordnung (40) zwei Abschnitte (41, 42) aufweist, von denen jeder im wesentlichen eine der beiden Kanten (10, 11) belastet, und wobei die Spannringanordnung von einem einzigen Spannring (40) gebildet wird, der im Bereich der durch die Kanten (32, 33) definierten Radialebenen Wülste (41, 42) aufweist, die im Bereich dieser Ebenen erhöhte Spannkräfte erzeugen.

2. Dichtungs- und Abstreifer-Anordnung mit einem in die Nut (4) eines von zwei senkrecht zur Nut (4) gegeneinander beweglichen Maschinenteilen (1, 2) eingelegten Dichtring (5; 31) aus zähelastischem Kunststoff und einer sich zwischen Dichtring (5; 31) und Nutgrund befindenden, den Dichtring (5; 31) radial belastenden Spannringanordnung (6) aus gummielastischem Material, wobei der Dichtring (5; 31) nahe seinen Enden am anderen Maschinenteil (2) anliegende Kanten (10, 11; 32, 33) aufweist, die im Betrieb beide gleichzeitig als Dichtkanten wirksam sind und mindestens einen zum Dichtring (5; 31) konzentrischen Ringraum (15) begrenzen, der sowohl gegenüber dem zur einen Seite der Anordnung gelegenen Hochdruckbereich als auch gegenüber dem zur anderen Seite der Anordnung gelegenen Niederdruckbereich abgedichtet ist, und von denen wenigstens eine Kante (11; 32, 33) von der Schnittlinie zwischen zwei in entgegengesetzten Richtungen ansteigenden Kegelflächen (12, 13; 34, 35, 36, 37) gebildet wird, dadurch gekennzeichnet daß die Spannringanordnung (6) zwei Abschnitte (61, 62) aufweist, von denen jeder im wesentlichen eine der beiden Kanten (10, 11) belastet, und daß die Spannringanordnung (6) zwei getrennte Spannringe (61, 62) umfaßt, von denen jeder im Bereich einer der durch die beiden Kanten (10, 11) definierten Ebenen angeordnet ist.

3. Dichtungs- und Abstreifer-Anordnung nach Anspruch 1, dadurch gekennzeichnet, daß der einzige Spannring (40) ein Vierlippendichtring ist.

4. Dichtungs- und Abstreifer-Anordnung nach Anspruch 2, dadurch gekennzeichnet, daß der Dichtring (5) an seiner den Spannringen (61, 62) zugewandten Seite einen zwischen die beiden Spannringe ragenden Trennsteg (24) aufweist.

5. Dichtungs- und Abstreifer-Anordnung nach Anspruch 4, dadurch gekennzeichnet, daß die Anlagefläche (23) für wenigstens einen Spannring (62) am Dichtring (5) vom Trennsteg (24) aus in Richtung auf den Spannring (62) radial nach außen ansteigt.

6. Dichtungs- und Abstreifer-Anordnung nach einem der vorhergehenden Ansprüche, dadurch gekennzeichnet, daß der Dichtring (31) im Bereich zwischen den beiden Kanten (32, 33) einen am anderen Maschinenteil anliegenden Stützsteg (38) aufweist.

7. Dichtungs- und Abstreifer-Anordnung nach Anspruch 6, dadurch gekennzeichnet, daß der Stützsteg (38) einen im wesentlichen rechteckigen Querschnitt mit einem am anderen Maschinenteil flach anliegenden Flächenabschnitt (39) aufweist.

8. Dichtungs- und Abstreifer-Anordnung nach einem der vorhergehenden Ansprüche, dadurch gekennzeichnet, daß sie in bezug auf ihre Längsmittelebene symmetrisch ausgebildet ist.

9. Dichtungs- und Abstreifer-Anordnung nach einem der Ansprüche 1 bis 7, dadurch gekennzeichnet, daß die am niederdruckseitigen Ende des Dichtringes (5) angeordnete Kante (10) von der Schnittlinie zwischen der inneren Flanke (9) und dem am anderen Maschinenteil anliegenden flachen Flächenabschnitt (7) eines am Ende des Dichtringes (5) angebrachten, im Querschnitt im wesentlichen rechteckigen Abstreifsteges (8) gebildet wird.

10. Dichtungs- und Abstreifer-Anordnung nach Anspruch 9, dadurch gekennzeichnet, daß der flache Flächenabschnitt (7) bei entspanntem Dichtring (5) mit einer dem anderen Maschinenteil (2) entsprechenden Zylinderfläche einen bis zu 15° betragenden Winkel α bildet.

11. Dichtungs- und Abstreifer-Anordnung nach einem der vorhergehenden Ansprüche, dadurch gekennzeichnet, daß wenigstens eine innen liegende Kegelfläche (13) des Dichtringes (5) in eine einen erweiterten Ölraum bildende Nut (15) übergeht.

12. Dichtungs- und Abstreifer-Anordnung nach einem der vorhergehenden Ansprüche, dadurch gekennzeichnet, daß der Dichtring (5) am niederdruckseitigen Ende einen wenigstens annähernd bis zum Nutgrund reichenden, eine Schmutzabdichtung bildenden Ansatz (25) aufweist.

13. Dichtungs- und Abstreifer-Anordnung nach Anspruch 12, dadurch gekennzeichnet daß der die Schmutzabdichtung bildende Ansatz (25) an seiner Außenseite nahe seinem Ende eine Ringnut (26) aufweist.

**Claims**

1. Sealing and wiper arrangement comprising a sealing ring (5; 31) made of tough elastic material fitted in the groove (4) of one or two machine parts (1, 2) which are movable relative to one another in a direction perpendicular to the groove (4), and a stressing ring arrangement (40) made of rubber elastic material arranged between the sealing ring (5; 31) and the base of the groove, and loading the sealing ring (5; 31) in the radial direction, the sealing ring (5; 31) being provided near its ends with edges (10, 11; 32, 33) resting against the other machine part (2), both edges acting in operation simultaneously as sealing edges and defining at least one annular space (15) which extends concentrically relative to the sealing ring (5; 31) and which is sealed off from both the high-pressure area on the one side of the arrangement and the low-pressure area on the other side of the arrangement, and at least one of said edges (11; 32, 33) being formed by the line of intersection between two conical surfaces (12, 13; 34, 35, 36, 37) rising in opposite directions, characterized in that the said stressing ring arrangement (40) comprises two portions (41, 42) each of them loading substantially one of the two edges (10, 11), and wherein the stressing ring arrangement is formed by a single stressing ring (40) having beads (41, 42) in the area of the radial planes defined by the edges (32, 33), said beads (41, 42) producing increased stressing forces in the area of the said planes.

2. Sealing and wiper arrangement comprising a sealing ring (5; 31) made of tough elastic material fitted in the groove (4) of one or two machine parts (1, 2) which are movable relative to one another in a direction perpendicular to the groove (4), and a stressing ring arrangement (6) made of rubber elastic material arranged between the sealing ring (5; 31) and the base of the groove, and loading the sealing ring (5; 31) in the radial direction, the sealing ring (5; 31) being provided near its ends with edges (10, 11; 32, 33) resting against the other machine part (2), both edges acting in operation simultaneously as sealing edges and defining at least one annular space (15) which extends concentrically relative to the sealing ring (5; 31) and which is sealed off from both the high-pressure area on the one side of the arrangement and the low-pressure area on the other side of the arrangement, and at least one of said edges (11; 32, 33) being formed by the intersection line between two conical surfaces (12, 13; 34, 35, 36, 37) rising in opposite directions, characterized in that the said stressing ring arrangement (6) comprises two portions (61, 62) each of them loading substantially one of the two edges (10, 11), and that the stressing ring arrangement (6) comprises two separate stressing rings (61, 62) each of which being arranged in the area of a plane defined by the edges (10, 11).

3. Sealing and wiper arrangement according to claim 1, characterized in that the single stressing ring (40) is a four-lipped sealing ring.

4. Sealing and wiper arrangement according to claim 2, characterized in that the sealing ring (5) is provided on its side facing the stressing rings (61, 62) with a separating bar (24) projecting between the two stressing rings.

5. Sealing and wiper arrangement according to claim 4, characterized in that the contact surface (23) on the sealing ring (5) for at least one stressing ring (62) rises from the separating bar (24) towards the said stressing ring (62) in a radial and outward direction.

6. Sealing and wiper arrangement according to one of the preceding claims, characterized in that the sealing ring (31) is provided in the area between the two edges (32, 33) with a supporting bar (38) resting against the other machine part.

7. Sealing and wiper arrangement according to claim 6, characterized in that the supporting bar (38) has a substantially rectangular cross-section and comprises a surface portion (39) which rests against the other machine part in a flat manner.

8. Sealing and wiper arrangement according to one of the preceding claims, characterized by a symmetrical arrangement relative to its longitudinal center plane.

9. Sealing and wiper arrangement according to one of claims 1 to 7, characterized in that the edge (10) provided at the low-pressure edge of the sealing ring (5) is formed by the line of intersection between the inner flank (9) and the flat surface portion (7) of a wiper bar (8) which is substantially rectangular in cross-section and provided at the end of said sealing ring (5), said surface portion (7) resting against the other machine part in a flat manner.

10. Sealing and wiper arrangement according to claim 9, characterized in that in the relaxed condition of the sealing ring (5) the flat surface portion (7) forms an angle $\alpha$ of up to 15° with the cylindrical surface defined by the other machine part (2).

11. Sealing and wiper arrangement according to one of the preceding claims, characterized in that at least one inner conical surface (13) of the sealing ring (5) ends in a groove (15) forming an enlarged oil space.

12. Sealing and wiper arrangement according to one of the preceding claims, characterized in that the sealing ring (5) is provided on its low-pressure end with a projection (25) extending at least nearly to the base of the groove and forming a dirt seal.

13. Sealing and wiper arrangement according to claim 12, characterized in that the projection (25) constituting the said dirt seal is provided with an annular groove (26) on its outside near its end.

**Revendications**

1. Agencement de joint et de racleur comportant un anneau d'étanchéité (5; 31), en matière synthétique tenacement élastique qui est inséré dans la rainure (4) d'une des deux parties de machine (1, 2) mobiles l'une par rapport à l'autre perpendiculairement à la rainure (4), et un agencement d'anneau de serrage (40), en matière caoutchouteusement élastique qui se trouve entre anneau d'étanchéité (5; 31) et fond de rainure et qui sollicite radialement l'anneau d'étanchéité (5; 31), l'anneau d'étanchéité (5; 31) présentant près de ses extrémités des arêtes (10, 11; 32, 33) qui sont appliquées sur l'autre partie de machine (2), qui en fonctionnement sont actives toutes deux simultanément en tant qu'arêtes d'étanchéité, qui délimitent au moins une chambre annulaire (15), concentrique à l'anneau d'étanchéité (5; 31), et rendue étanche tant par rapport à la zone de haute pression située d'un des côtés de l'agencement qu'aussi par rapport à la zone de basse pression située de l'autre côté de l'agencement, et dont au moins une arête (11; 32, 33) est formée par la ligne de section entre deux surfaces coniques (12, 13; 34, 35, 36, 37) qui montent dans des directions opposées, caractérisé en ce que l'agencement d'anneau de serrage (40) présente deux sections (41, 42) dont chacune sollicite essentiellement une des deux arêtes (10, 11), et en ce que l'agencement d'anneau de serrage est formé par un anneau de serrage unique (40) qui présente dans la zone des plans radiaux déterminés par les arêtes (32, 33) des bourrelets (41, 42) qui produisent dans la zone de ces plans des forces de serrage élevées.

2. Agencement de joint et de racleur comportant un anneau d'étanchéité (5; 31), en matière synthétique tenacement élastique qui est inséré dans la rainure (4) d'une des deux parties de machine (1, 2) mobiles l'une par rapport à l'autre perpendiculairement à la rainure (4), et un agencement d'anneau de serrage (6), en matière caoutchouteusement élastique qui se trouve entre anneau d'étanchéité (5; 31) et fond de rainure et qui sollicite radialement l'anneau d'étanchéité (5; 31), l'anneau d'étanchéité (5; 31) présentant près de ses extrémités des arêtes (10, 11; 32, 33) qui sont appliquées sur l'autre partie de machine (2), qui en fonctionnement sont toutes deux simultanément actives en tant qu'arêtes d'étanchéité et qui délimitent au moins une chambre annulaire (15), concentrique à l'anneau d'étanchéité (5; 31) et rendue étanche tant par rapport à la zone de haute pression située d'un des côtés de l'agencement qu'aussi par rapport à la zone de basse pression située de l'autre côté de l'agencement, et dont au moins une arête (11; 32, 33) est formée par la ligne de section entre deux surfaces coniques (12, 13; 34, 35, 36, 37) qui montent dans des directions opposées, caractérisé en ce que l'agencement d'anneau de serrage (6) présente deux sections (61, 62) dont chacune sollicite essentiellement une des deux arêtes (10, 11), et en ce que l'agencement d'anneau de serrage (6) comprend deux anneaux de serrage séparés (61, 62) dont chacun est agencé dans la zone d'un des plans déterminés par les deux arêtes (10, 11).

3. Agencement de joint et de racleur suivant la revendication 1, caractérisé en ce que l'anneau de serrage unique (40) est un anneau d'étanchéité à quatre lèvres.

4. Agencement de joint et de racleur suivant la revendication 2, caractérisé en ce que l'anneau d'étanchéité (5) présente sur son côté tourné vers les anneaux de serrage (61, 62) une nervure de séparation (24) qui fait saillie entre les deux anneaux de serrage.

5. Agencement de joint et de racleur suivant la revendication 4, caractérisé en ce que la surface de butée (23) d'au moins un anneau de serrage (62) sur l'anneau d'étanchéité (5) monte radialement vers l'extérieur à partir de la nervure de séparation (24) en direction de l'anneau de serrage (62).

6. Agencement de joint et de racleur suivant l'une quelconque des revendications précédentes, caractérisé en ce que l'anneau d'étanchéité (31) présente dans la zone entre les deux arêtes (32, 33) une nervure de soutien (38) appuyée sur l'autre partie de machine.

7. Agencement de joint et de racleur suivant la revendication 6, caractérisé en ce que la nervure de soutien (38) présente une section transversale sensiblement rectangulaire, avec une section de surface (39) en appui à plat sur l'autre partie de machine.

8. Agencement de joint et de racleur suivant l'une quelconque des revendications précédentes, caractérisé en ce qu'il est réalisé symétriquement par rapport à son plan longitudinal médian.

9. Agencement de joint et de racleur suivant l'une quelconque des revendications 1 à 7, caractérisé en ce que l'arête (10) agencée sur l'extrémité, du côté à basse pression, de l'anneau d'étanchéité (5) est formée par la ligne de section entre le flanc interne (9) et la section de surface (7) plate, s'appuyant sur l'autre partie de machine, d'une nervure de raclage (8) ménagée à l'extrémité de l'anneau d'étanchéité (5) et sensiblement rectangulaire en section.

10. Agencement de joint et de racleur suivant la revendication 9, caractérisé en ce que, lorsque l'anneau d'étanchéité (5) est relâché, la section de surface plate (7) forme avec une surface cylindrique qui correspond à l'autre partie de machine (2) un angle $\alpha$ allant jusqu'à 15°.

11. Agencement de joint et de racleur suivant l'une quelconque des revendications précédentes, caractérisé en ce qu'au moins une surface conique (13) de l'anneau d'étanchéité, située à l'intérieur, se transforme en une rainure (15) formant un logement à huile élargi.

12. Agencement de joint et de racleur suivant l'une quelconque des revendications précédentes, caractérisé en ce que l'anneau d'étanchéité (5) présente à l'extrémité du côté à basse pression une saillie (25) arrivant au moins approximativement jusqu'au fond de rainure et formant un élément d'étanchéité aux salissures.

13. Agencement de joint et de racleur suivant la revendication 12, caractérisé en ce que la saillie (25) qui forme l'élément d'étanchéité aux salissures présente, sur son côté externe près de son extrémité, une rainure annulaire (26).

Fig. 1

Fig. 2